# EUROPEAN PATENT SPECIFICATION

(11) **EP 1 211 618 B1**
(45) Date of publication and mention of the grant of the patent: **27.11.2013**
(21) Application number: 00430027.3
(22) Date of filing: 21.08.2000
(51) Int. Cl.: G06Q 10/00

(54) **Method and system for providing multimedia advertisement**
Verfahren und Vorrichtung für die Bereitstellung von multimedialer Werbung
Méthode et système pour fournir des annonces multimédia

(43) Date of publication of application: 05.06.2002
(73) Proprietor: Gemalto SA, 92190 Meudon (FR)
(72) Inventor: Chua, Thian Yee, Marble Arch, London W1H 8AA (GB)

(56) References cited:
- WO-A-00/31977
- WO-A-99/38117
- US-A- 5 241 659
- US-A- 5 412 564
- US-A- 5 493 692
- US-A- 6 044 408
- US-A- 6 055 512
- FUENFROCKEN S ET AL: "DIE JAVACARD ALS PROGRAMMIER- UND AUSFUEHRUNGSPLATTFORM FUER VERTEILTE ANWENDUNGEN" JIT. JAVA INFORMATIONS TAGE, XX, XX, September 1999 (1999-09), pages 100-109, XP000998554
- MARC ABRAMS & CONTANTINOS PHANOURIOU: "UIML: An XML Language for Building Device-Independent User Interfaces" XML CONFERENCE PROCEEDINGS. PROCEEDINGS OF XML, XX, XX, December 1999 (1999-12), XP002161335

## Description

The invention concerns a method and system for providing multimedia advertising to individuals anywhere and anytime, whatever terminal they may be using.

Conventional prior art advertisement systems have to adapt the multimedia data to a specific kind of terminal and they have to display the data according to the providers intention without regard to the will of the user. For example, in the case of an advertisement broadcast on Television, the data will be either analog or digital video and the designated terminal will be a home TV set. Similarly in Internet advertising , the data takes the form of a banner and is especially designed for a terminal which is predetermined as a personal computer.

Therefore a conventional advertisement scheme is restricted to one kind of terminal, and is not efficient if the terminal is not activated by end-users at the time the advertisement is sent. Further, such advertisement schemes work in a one-to-many way, which implies that they are unable to deal with the specific needs and tastes of each individual user.

Hence, there is a need for a more efficient advertisement scheme, which is able to reach end-users whatever terminal they are using at a given time, and, furthermore, is able to adapt according to the individual characteristics of each end-user.

The document WO 99/38117 A, filed on the 29 July, 1999 from Freeman David H and Freemen Gary A discloses a flexible chip card with a flexible display and a power source, that may be used to store and display advertisements and other information.

The document US A 6 044 408, filed on the 28 march, 2000 from Eisler Craig G et al discloses a method to find capabilities available to process a requested API.

But none of those two documents give any indication concerning allowing a man skilled in the art to deduct the disclosed method of providing multimedia data to a user terminal.
- connecting a digital portable device such as a smart card to the terminal
- transmitting a Terminal Identification Code from the terminal to an Advertising Data Control Processor of the portable device
- selecting appropriate multimedia advertising data according to the Terminal Identification Code
- transmitting the selected multimedia advertising data from a Multimedia Data Storage of the portable device to the terminal.

An Electronic portable device (2) such as a smart card according to the invention comprises:
- advertising data control processor
- multimedia data storage means
the electronic portable device being able to be used with a plurality of kinds of terminal; the advertising data control processor being able to recognise a Terminal Identification Code for each kind of Terminal and to select multimedia data according to the Terminal Identification Code.

Thus, the advertisement multimedia data can be presented to the customer, whatever kind of terminal is being used.

According to an embodiment of the present invention, the method comprises the additional step of defining a profile in the portable device, wherein this profile is taken into account in addition to the Terminal Identification Code during the step of selecting multimedia advertising data.

The electronic portable device according to the embodiment further comprises a user profile, wherein the advertising control processor is able to select multimedia data according to both the profile and the Terminal Identification Code.

Thanks to the additional features of these alternative embodiments, the needs and tastes of the user can be defined in the profile and the multimedia advertisement data can beselected accordingly.

### BRIEF DESCRIPTION OF THE DRAWINGS

The above objects and advantages of the present invention will be better understood from the following description when taken in conjunction with the accompanying drawing which shows an electronic portable device according to the invention.

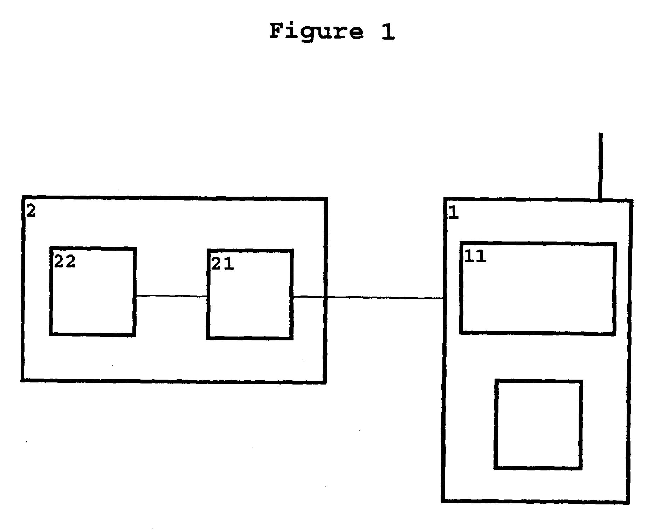

Figure 1 represents the basic device of a system according to the invention.

### DETAILED DESCRIPTION OF THE EMBODIMENTS

Referring to figure 1 there is shown:
- a user portable device such as a smart card (2) working with an open operating system like JavaCard or Windows for SmartCards, comprising a Multimedia Advertising data storage (22) and an Advertising Control Processor (21) able to access the storage (22) and able to communicate with a terminal T (1) among a plurality of terminals.

Further, Figure 1 represents also:
- a terminal T (1) comprising means (12) for outputting the advertisement data, and means (11) that enable communication with the Advertising Control Processor (21) of said user portable device (2).

According to the invention, each end-user of the multimedia advertising scheme owns one portable device (2), which is independent of terminal type. When the end-user activates a terminal (1) by using the portable device (2), the Advertising Control Processor (21) starts to communicate with the terminal (1) in order to recognise the type of terminal being used. When this communication is standardised, a Terminal Identification code (11) stored in the terminal (1) can directly be accessed and fetched by the Advertising Control Processor (21). When the communication is not standardised, for example when the terminal is of an older type, it is usually still possible to obtain a Terminal Identification Code (11) by testing and analysing some particular data stored in the Terminal. For example, if the terminal is a personal computer then the identifying data may be the operating system, however, if the terminal is a television set then the identifying data may be the manufacturer and model number.

After having identified the type of terminal being used, the Multimedia Advertising Processor accesses the data storage (22), selects the appropriate multimedia data according to the terminal type and communicates the selected multimedia data to the terminal. The advertisement data is presented to the user with the output means (11) of the terminal which usually comprise a screen and/or speakers.

Portable electronic devices of the smart card type have until now been limited in terms of memory and processor capacities. Because of this limitation, links or references to the actual advertisement data can be stored in the data storage (22). For example, links to sound, images or video can be stored in the data storage (22) and the corresponding data will be downloaded to the terminal by using the network to which the terminal is connected. For example, the data can be downloaded through an internet connection if the terminal is a personal computer, or inside short messages if the terminal is wireless mobile telephone, in the vertical blanking interval if the terminal is a standard television set, and so on.

In this case, the advertisement can only be reproduced online, that is when the terminal is connected to a network.

New portable electronic devices with bigger capacities are increasingly available, which are able to store sound, pictures and short video. The data storage (22) of such devices can store the actual advertisement data instead of links. In such cases, the advertisement can also be reproduced offline, that is when the terminal is not connected to the network.

Whatever form it takes (links or actual multimedia data), the data has to be stored in the advertisement data storage (22). This can be done in different ways. For example, the data can be updated when the portable device is used with a terminal connected to a network.

In a preferred embodiment, the advertising method is associated with other applications in the same portable device. For example the advertising scheme can be linked to a loyalty scheme wherein a profile of the customer can be defined and stored in the card, and then specific advertisement data can be stored in the data storage (22) according to the customer profile. The advertisement data can be updated each time the customer presents the portable device at the point of sale. In a later phase, the advertisement can be presented to the customer when the portable device is used with any kind of compatible terminal, either online or offline according to the type of data stored in the advertisement data storage (22) of the portable device.

When such a customer profile is defined, the advertisement better fulfils the needs and tastes of the customer. The customer can receive special offers for earning loyalty points. The profile can be personal but can also define group membership, like silver, gold or platinum membership of a customer loyalty scheme, and the advertisements can then be group-specific.

## Claims

1. Method of providing multimedia data to a user terminal (1) comprising the steps of:
- connecting a digital portable device (2) to the terminal (1);
- transmitting a Terminal Identification Code from the terminal (1) to a Data Control Processor (21) of the portable device;
- detecting adapted multimedia data according to the Terminal Identification Code;
- transmitting the selected multimedia data from a Multimedia Data Storage (22) of the portable device to the terminal (1).

2. Method of providing multimedia data according to claim 1, wherein the selected material is transmitted in the form of links causing the terminal (1) to access a further source of multimedia information.

3. Method of providing multimedia data according to claim 1 or 2, comprising the additional step of defining a profile in the portable device (2), wherein this profile is taken into account in addition to the Terminal Identification Code during the step of selecting multimedia data.

4. Method according to claim 1, 2 or 3, wherein the device (2) comprises a smart card.

5. Electronic portable device (2) comprising:
- data control processor (21);
- multimedia data storage means (22); the electronic portable device being adapted to be used with a plurality of different kinds of terminal (1); the data control processor (21) being adapted to recognize a Terminal Identification Code for each kind of Terminal and adapted to select multimedia data according to the Terminal Identification Code

6. Device according to claim 5, wherein said multimedia data comprises links for causing the terminal (1) to access a further source of multimedia information.

7. Electronic portable device (2) according to claim 4, further comprising a user profile, wherein the control processor (21) is able to select multimedia data according to both the profile and the Terminal Identification Code.

8. Electronic portable device (2) according to claim 5, 6 or 7, the device comprising a smart card.

## Patentansprüche

1. Methode für die Lieferung von Multimedia-Daten zu einem Benutzerterminal (1), die folgende Schritte aufweist:
- Anschluss eines digitalen tragbaren Geräts (2) zum Benutzerterminal (1),
- Übermittlung eines Terminalidentifikationscode vom Benutzerterminal (1) zu einem Datenkontrolle-Prozessor(21) des digitalen Geräts,
- Selektierung der Multimedia-Daten gemäß dem Terminalidentifikationscode,
- Übermittlung der selektierten Multimedia-Daten von einem Multimedia-Datenspeicher (22) des tragbaren Geräts zu dem Benutzerterminal (1).

2. Methode für die Lieferung von Multimedia-Daten nach Anspruch 1, wobei das selektierte Material in der Form von Verbindungen übertragen wird und das Benutzerterminal (1) dazu veranlasst einen Zugriff auf eine weitere Multimedia-Informationsquelle zu nehmen.

3. Methode für die Lieferung von Multimedia-Daten nach Anspruch 1 oder 2, die den zusätzlichen Schritt aufweist, dass sie ein Profil in dem tragbaren Gerät (2) und unter Anbetracht dieses Profils gemeinsam den Terminalidentifikationscode während der Selektierung der Multimediadaten bestimmt.

4. Methode nach Anspruch 1, 2 oder 3, wobei das tragbare Gerät (2)eine Chip-Karte aufweist.

5. Tragbares elektronisches Gerät (2) weist auf:
- Datenkontrolle-Prozessor (21);
- Multimedia-Datenspeichermittel (22);
das tragbare elektronische Gerät ist für eine Vielzahl von unterschiedlichen Benutzerterminaltypen (1) anwendbar, der Datenkontrolle-Prozessor (21) ist an das Erkennen eines Terminalidentifikationscode für jeglichen Benutzerterminaltyp angepasst und auf die Selektion der Multimedia-Daten gemäß dem Terminalidentifikationscode angepasst.

6. Gerät nach Anspruch 5, wobei die genannten Multimedia-Daten die Verbindungen aufweisen, welche Benutzerterminal (1) dazu veranlassen einen Zugriff auf eine weitere Multimedia-Informationsquelle zu nehmen.

7. Tragbares elektronisches Gerät (2) nach Anspruch 4, weist desweiteren ein Benutzer-Profil auf, wobei der Datenkontrolle-Prozessor (21) die Multimedia-Daten entsprechend dem Profil und des Terminalidentifikationscode selektieren kann.

8. Tragbares elektronisches Gerät (2) nach Anspruch 5, 6, oder 7, wobei das Gerät eine Chip-Karte aufweist.

## Revendications

1. Procédé pour fournir des données multimédia à un terminal d'utilisateur (1) comprenant les étapes consistant à :
- connecter un appareil numérique portable (2) au terminal (1);
- transmettre un Code d'Identification de Terminal du terminal (1) à un Processeur de Contrôle de Données (21) de l'appareil portable ;
- détecter les données multimédia adaptées, selon le Code d'Identification de Terminal ;
- transmettre les données multimédia sélectionnées d'une Mémoire de stockage des Données Multimédia (22) de l'appareil portable au terminal (1).

2. Procédé pour fournir des données multimédia selon la revendication 1, dans lequel le matériel sélectionné est transmis sous la forme de liens permettant au terminal (1) d'accéder à une autre source d'informations multimédia.

3. Procédé pour fournir des données multimédia selon la revendication 1 or 2, comprenant l'étape supplémentaire consistant à définir un profil dans l'appareil portable (2), dans lequel ce profil est pris en compte en plus du Code d'Identification de Terminal au cours de l'étape de sélection des données multimédia.

4. Procédé selon la revendication 1, 2 ou 3, dans lequel l'appareil (2) comprend une carte à puce.

5. Appareil électronique portable (2) comprenant :
- un processeur de contrôle de données (21);
- des moyens de stockage de données multimédia (22);
l'appareil électronique portable étant adapté pour être utilisé avec une pluralité de types de terminal (1) différents;
le processeur de contrôle de données(21) étant adapté pour reconnaître un Code d'Identification de Terminal pour chaque type de Terminal et adapté pour sélectionner les données multimédia selon le Code d'Identification de Terminal.

6. Appareil selon la revendication 5, dans lequel lesdites données multimédia comprennent des liens permettant au terminal (1) d'accéder à une autre source d'informations multimédia.

7. Appareil électronique portable (2) selon la revendication 4, comprenant en outre un profil d'utilisateur, dans lequel le processeur de contrôle (21) est capable de sélectionner les données multimédia en fonction à la fois du profil et du Code d'Identification de Terminal.

8. Appareil électronique portable (2) selon la revendication 5, 6 ou 7, dans lequel l'appareil comprend une carte à puce.
